# EUROPEAN PATENT SPECIFICATION

(11) **EP 0 309 164 B1**
(45) Date of publication and mention of the grant of the patent: **27.07.1994**
(21) Application number: 88308591.2
(22) Date of filing: 16.09.1988
(51) Int. Cl.: G04C 10/00, G04C 3/14

(54) **Analog electronic timepiece**
Elektronische Analog-Uhr
Montre électronique analogique

(30) Priority: 21.09.1987 JP 236463/87; 21.09.1987 JP 236464/87; 21.09.1987 JP 236465/87
(43) Date of publication of application: 29.03.1989
(60) Divisional application: 92111462.5
(73) Proprietor: SEIKO EPSON CORPORATION, Shinjuku-ku Tokyo-to (JP)
(72) Inventor: Hayakawa, Motomu c/o Seiko Epson Corporation, Tokyo (JP); Yoshino, Masahito c/o Seiko Epson Corporation, Tokyo (JP)
(74) Representative: Sturt, Clifford Mark

(56) References cited:
- EP-A- 0 236 046
- CH-A- 600 420
- CH-A- 616 044
- GB-A- 2 036 387
- PATENT ABSTRACTS OF JAPAN, vol. 010, no. 183 (P-472), 26th June 1986; & JP-A-61 29 783

## Description

This invention relates to analog electronic timepieces.

A typical electronic timepiece includes a solar battery as a part of a dial plate, arranged so that electric power produced by illumination of the solar battery charges a secondary battery. It is known from Japanese Laid Open Patent Application No. 154665/87, Japanese Laid Open Patent Application No. 11846/74 and Japanese Utility Model Publication No. 4240/81 that an electronic timepiece may employ a charging terminal at an external portion thereof, arranged so that electric power charges a secondary battery depending on the contact with an external power source. Further, it is known from Japanese Laid Open Patent Application No. 29783/86, that an electronic timepiece may employ an electro-magnetic coupling coil disposed inside it and arranged so that a magnetic field is supplied to the electro-magnetic coupling coil from the exterior to charge a secondary battery. Furthermore, it is known from Japanese Patent Publication No. 15035/85 that an electronic timepiece may employ a motor coil for driving it and arranged so that, in a similar manner to Japanese Laid Open Patent Application No. 29783/86, a magnetic field is supplied to the motor coil, when dis-connected from a timepiece driving circuit, during charging of a secondary battery.

However, the above previous proposals have the following dis-advantages.

First, when a solar battery system or charging terminal or system is used, the design of the external appearance of wrist watches is limited, because wrist watches are small in size. Therefore, it is difficult to apply the solar battery or the charging terminal to analog electronic wrist watches without damaging ornamental appearance.

Next, the electro-magnetic coupling system described in Japanese Laid Open Patent Application No. 29783/86 requires an electro-magnetic coupling coil and a rectifying diode or the like, in addition to the motor coil for driving the wrist watch resulting in an increase in the physical size of the wrist watch as well as increase in cost.

Further, in the system using a motor coil for driving and charging a timepiece, the motor coil requires a switching mechanism to alternately connect the coil to the timepiece driving circuit or the charging circuit depending upon the movement of the time indicating hands or the charging operation, and a rectifying diode is also required as part of the charging circuit. As a result, the flexibility of the design of a wrist watch of this type is limited, cost is increased and some special regard must be paid to mechanical reliability of the switching mechanism. Since during charging the movement of the time indicating hands is stopped, it is necessary to set the watch after charging which is inconvenient. Accordingly, it is desirable to provide a charging type electronic analog timepiece which overcomes the shortcomings of the prior art described above.

The present invention seeks to provide a small-sized and low cost charging type analog electronic timepiece where no electronic circuitry or charging mechanism except for a small logic circuit is required. The present invention also seeks to provide an analog electronic timepiece wherein charging of a re-chargeable or secondary battery can be carried out without stopping movement of time indicating hands.

CH-A-616044 discloses a timepiece having an internal direct current voltage source which generates voltage at too low a level to be used and requires transformation. The source is a thermo-electric battery whose output is chopped by a voltage chopper transistor controlled by a pulse to be blocked during the time of step motor driving pulses. The timing of the blocking pulse is derived from the internal logic of the circuitry.

JP-A-6129783 discloses a timepiece with charging power derived from an external A.C. magnetic field, charging being performed with a specific coil and diode provided within the timepiece. Driving of the time indicating hands is suspended during charging and the time of suspension is measured so that a time correction step may follow charging.

GB-A-2036387 discloses a timepiece having a timebase oscillator, an adjustable frequency divider, a memory for the adjusted frequency, a logic circuit responding to the memory and the divider to produce a measuring signal representative of the division factor and oscillator frequency, and a switch to apply the measuring signal to a wave emitting transducer in response to an interrogation signal.

EP-A-0236046 discloses a timepiece with a re-chargeable power source whose voltage may be detected by operation of an external switch, which operation temporarily stops the movement of the time indicating hands.

CH-A-600420 discloses a timepiece in which a battery power source is permanently connected to an emergency unit and to a motor. The battery is fed with current in buffer mode during mains operation via a resistor and rectifier, the current being regulated so that the battery is fully charged as long as the mains does not fail.

According to the invention, therefore, an analog electronic timepiece comprises a driving circuit including a plurality of switching elements for applying driving pulses to a coil of a step motor arranged to drive time indicating hands, a re-chargeable battery and charging means for charging the battery in the period between the application of driving pulses to the coil of the step motor, so that charging of the battery does not interrupt driving of the time indicating hands, characterised in that each switching element is a MOSFET and the charging means includes a PN-junction being constituted by a parasitic diode formed between the substrate and drain or source of each MOSFET, and thus in parallel with each switching element for rectifying an alternating current voltage induced in the coil of the step motor by an external alternating magnetic field.

Preferably, there is provided means for short circuiting the coil of the step motor after termination of each driving pulse and before charging of the battery commences.

Advantageously, the charging means is such that during charging of the battery the switching elements are in an OFF state, so that the PN-junctions constitute a rectifying circuit.

It is preferred to include a timepiece means for detecting the voltage of the battery and for preventing charging thereof if the voltage detected exceeds a predetermined voltage.

The scope of the invention is defined by the appended claims; and how it can be carried into effect is hereinafter particularly described with reference to the accompanying drawings in which:-
Figure 1 is a circuit diagram of one embodiment of an analog electronic timepiece according to the present invention;
Figure 2 (a) is a sectional view of a P-channel MOSFET and parasitic diode;
Figure 2 (b) is an equivalent circuit diagram of the MOSFET of Figure 2 (a);
Figure 3 is an explanatory diagram showing the direction of current flow during charging of a secondary battery of the analog electronic timepiece of Figure 1 wherein full wave rectification takes place;
Figure 4 is a view similar to Figure 3 where half wave rectification takes place;
Figure 5 is a timing chart illustrating the timing for charging a secondary battery and timing for driving a step motor of the electronic timepiece of Figure 1;
Figure 6 is a timing chart showing the timing of signals of a charging control circuit of the analog electronic timepiece of Figure 1;
Figure 7 is a graph showing reverse induced current which flows in a motor coil of a step motor;
Figure 8 is a view illustrating rotation of a rotor of a step motor;
Figure 9 illustrates the direction of current flow during operation of a limiting circuit of the analog electronic timepiece of Figure 1 and;
Figures 10 (a) and 10 (b) are circuit diagrams of a sampling voltage detecting circuit of an analog electronic timepiece according to the present invention.

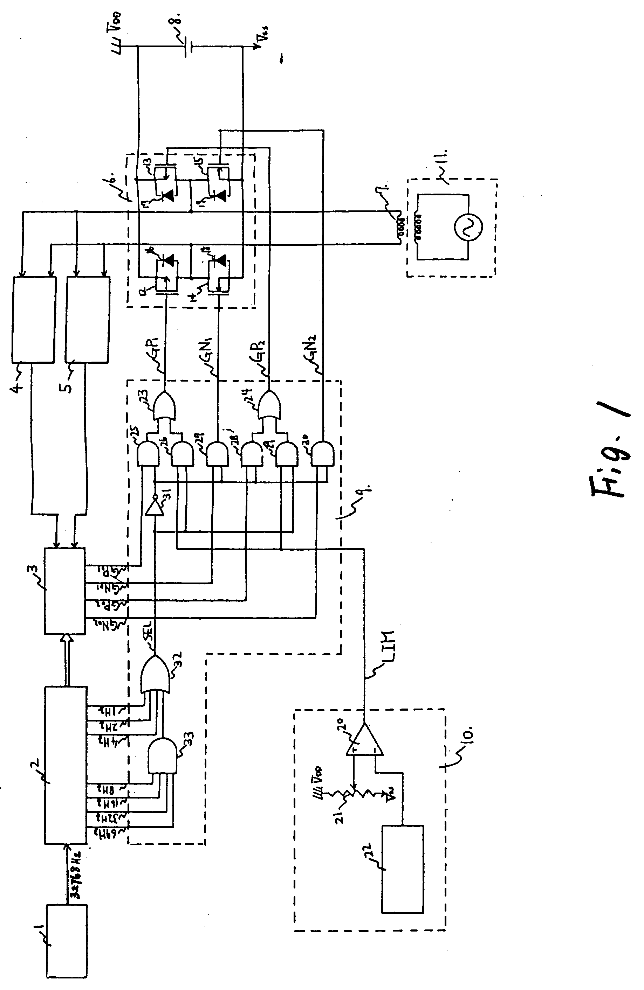

Referring first to Figure 1, there is shown one embodiment of an analog electronic timepiece according to the present invention. An oscillator circuit 1 generates a reference signal of 32768 Hz and has a small-size quartz crystal oscillator serving as a vibrator or time standard. The reference signal is frequency divided by a frequency divider circuit 2 to generate signals having frequencies of 1 Hz, 2 Hz, 4 Hz, 8 Hz, 16 Hz, 32 Hz and 64 Hz required for driving the analog electronic timepiece. A motor driving waveform shaping circuit 3 is provided to generate a plurality of pulse signals required for driving a step motor of the electronic timepiece. A rotation detection circuit 4 is provided to detect whether a rotor of the step motor is rotated or not by a motor driving pulse P1. When the rotor is in a non-rotating condition, this is detected by the non-rotation detection circuit 4 which outputs a compensation motor pulse P2 to the waveform shaping circuit 3. A magnetic field detection circuit 5 is provided to increase the reliability in moving time indicating hands (not shown) by the step motor, and further to cancel the motor driving pulse P1 and output a compensation motor pulse P2 when an external magnetic field is applied to the analog electronic timepiece. Circuits 3, 4 and 5 are relatively low power consumption electronic driving circuits and are known from Japanese Laid Open Patent Application No. 75520/79, Japanese Laid Open Patent Application No. 77162/79 and Japanese Laid Open Patent Application No. 87977/80.

A motor driving circuit 6 is composed of P-channel MOSFETs 12, 13 and N-channel MOSFETs 14, 15 which are used for driving the step motor. Parasitic diodes 16 to 19 of the respective MOSFETs 12 to 15 serve as rectifying elements.

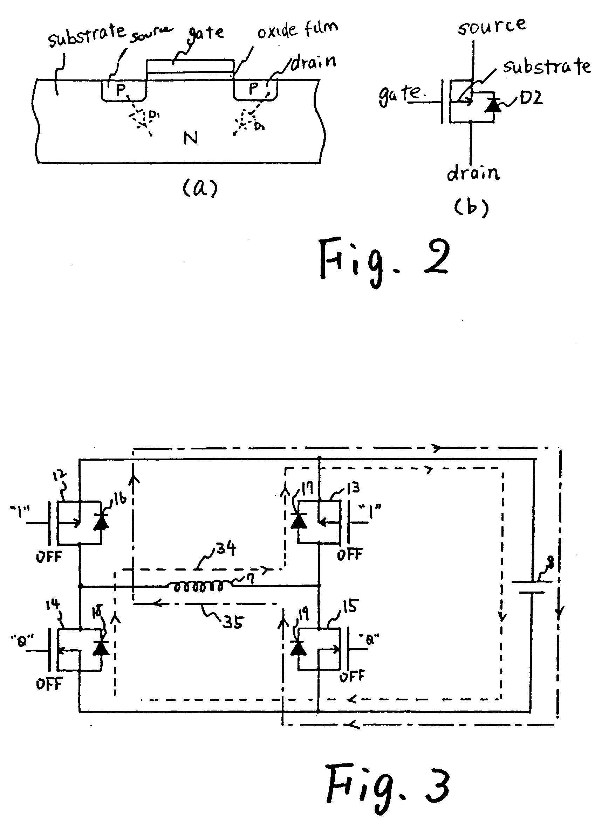

Figure 2 (a) is a sectional view of a P-channel MOSFET and Figure 2 (b) shows an equivalent circuit thereof. A PN-junction D1 is formed between a source and substrate and a PN-junction D2 is formed between a drain and substrate. Thus, each MOSFET has a parasitic diode in parallel therewith. Herein, when the MOSFET is utilised for driving the step motor, since the source and substrate are equally potential, the PN-junction D1 is invalid and the PN-junction D2 serves as a diode. In this case, the PN-junction D2 is referred to as a "parasitic diode", the drain serving as an anode of the diode and the substrate and the source serving as a cathode. The parasitic diode of an N-channel MOSFET is arranged in reverse to a P-channel MOSFET, that is, the substrate and the source serve as the anode and the drain serves as the cathode. In the present invention, the parasitic diode is also utilised as a rectifying element, so that no external rectifying element is required.

Referring back to Figure 1, the step motor has a motor coil 7. The step motor is driven by controlling ON/OFF states of the MOSFETs 12 to 15 and thus the time indicating hands are removed. During charging of a rechargeable or secondary battery 8, a AC magnetic field generated from an external charging device 11 is inter-linked with the motor coil 7 and, as a result of electro-magnetic induction, and AC voltage is induced in the motor coil 7 to charge the secondary battery 8, the parasitic diodes 16 to 19 serving as a rectifying circuit. The analog electronic timepiece is driven by the energy stored in the secondary battery 8.

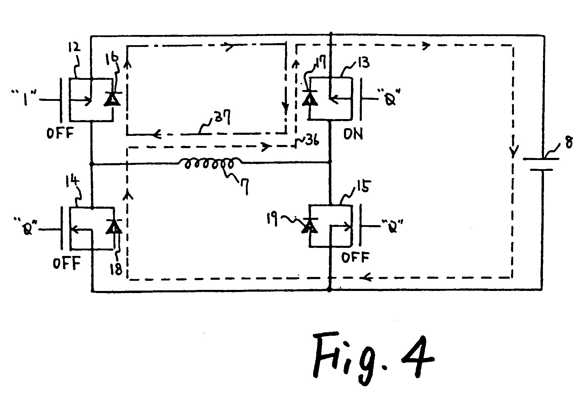

Figure 3 is an explanatory diagram showing the direction of current flow during charging of the secondary battery. In Figure 3, upon generation of the AC voltage in the motor coil 7, when the potential at the right side of the motor coil is higher, current flows in the direction of arrow 34, and when the potential at the left side of the motor coil is higher, current flows in the direction of arrow 35. Irrespective of which potential is higher, current flows to the secondary battery 8 in a charging direction, so that full wave rectification takes place. In order to establish full wave rectification, it is necessary to control the MOSFETs 12 to 15 so that all are turned to the OFF state. If one of the MOSFETs is in the ON state half wave rectification takes place as illustrated in Figure 4. In Figure 4, only the MOSFET 13 is controlled so as to be turned to the ON state and thus the terminals of its parasitic diode are short circuited, so that no diode bridge is formed. Therefore, when the right side potential of the motor coil 7 is higher, current flows in the direction of arrow 36 to charge the secondary battery 8. On the other hand, when the left side potential of the motor coil 7 is higher, current flows in the direction of arrow 37, that is, current flows from the parasitic diode 16, through the MOSFET 13 and the motor coil 7, resulting in a closed loop. Therefore, the secondary battery 8 is not charged and half wave rectification takes place. As a result, charging efficiency is decreased by half.

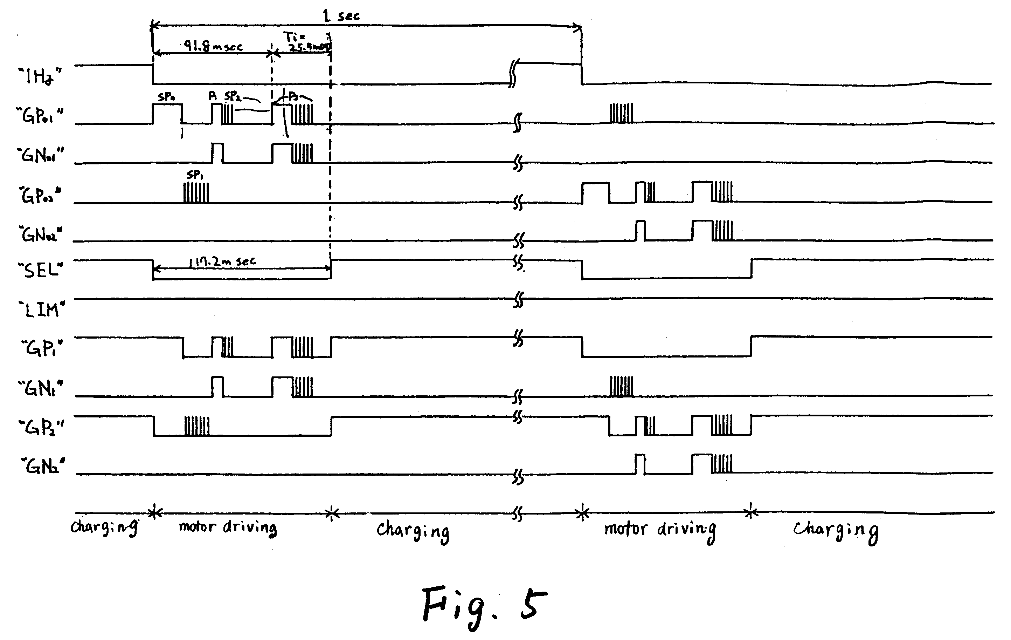

When both MOSFETs 12, 13 are in the ON state, or both MOSFETs 14, 15 are in the ON state, the secondary battery 8 is not charged at all. Therefore, in order to provide a rectifying circuit having the best efficiency for charging the secondary battery 8, it is necessary to turn all the MOSFETs 12 to 15 to the OFF state. However, when the MOSFETs 12 to 15 are in the OFF state, it is impossible to drive the step motor. On the other hand, in order to charge the secondary battery without affecting driving of the step motor, the timing for driving of the step motor and the timing for charging the secondary battery are controlled as shown in the timing chart of Figure 5. Namely, since the period for moving the time indicating hands is 1 Hz, all timing signals are generated in synchronism with the 1 Hz signal generated from the divider circuit 2. The period of 117.2 milli-seconds from the trailing edge of the 1 Hz signal becomes the period for driving the step motor, and the period of 882.8 milli-seconds from the termination of the period for driving the step motor until the next trailing edge of the 1 Hz signal becomes the timing for charging the secondary battery. In such a way, the timing for driving the step motor and the timing for charging the secondary battery are alternately repeated. Therefore, the period for charging the battery is 882.8 milli-seconds per second, so that charging efficiency is decreased by approximately 10%. However, since the respective timings are controlled as mentioned above, it is possible to charge the secondary battery without affecting movement of the time indicating hands and the correct time is kept irrespective of whether the secondary battery is being charged or not.

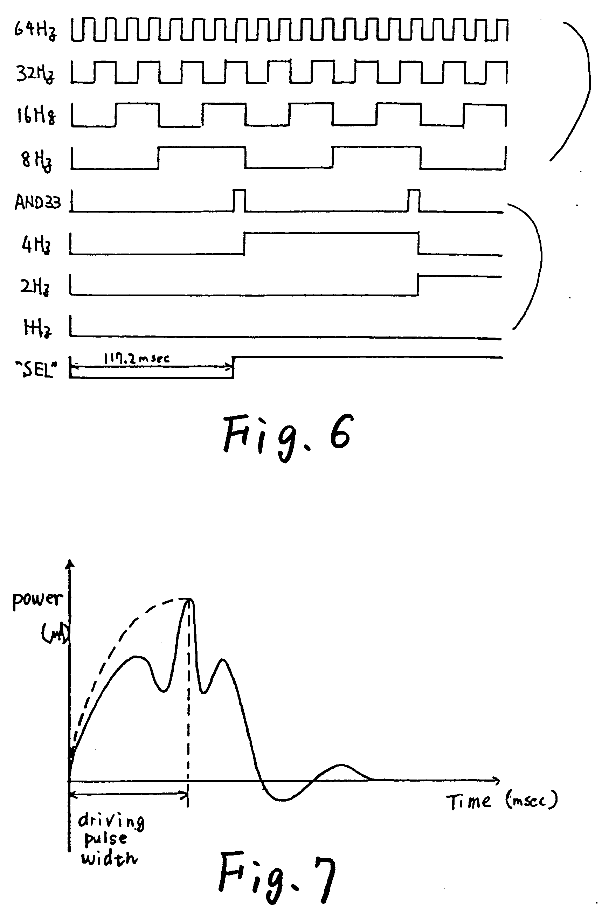

The operation of the analog electronic timepiece shown in Figure 1 will now be explained. The timing for driving the step motor is switched to the timing for charging the secondary battery 8 by a charging control circuit 9 and a signal SEL in the charging control circuit 9 becomes level 0 during the period of 117.2 milli-seconds from the trailing edge of the 1 Hz signal. Figure 6 shows a timing chart illustrating generation of the signal SEL from an AND gate 33 and an OR gate 32. The 64 Hz, 32 Hz, 16 Hz and 8 Hz signals generated from the divider circuit 2 serve as input signals to the AND gate 33 and the output signal of the AND gate 33 and the 4 Hz, 2 Hz and 1 Hz signals from the divider circuit 2 serve as input signals of the OR gate 32. The signal generated from the OR gate 32 is the signal SEL. An AND gate 25 receives the signal SEL inverted by the inverter 31 and a signal GP01 from the waveform shaping circuit 3 and an OR gate 23 outputs a gate signal GP1 to the MOSFET 12. A signal GN01 from the waveform shaping circuit 3 is fed to one input of an AND gate 27 which outputs a gate signal GN1 to the MOSFET 14. Similarly, a signal GP02 from the waveform shaping circuit 3 is provided as one input of an AND gate 28 and an OR gate 24 produces a gate signal GP2 to the MOSFET 13. A signal GN02 from the waveform shaping circuit 3 is fed to an AND gate 30 whose output is a gate signal GN2 which is fed to the MOSFET 15. The signals GP01, GN01, GP02, GN02 from the waveform shaping circuit 3 are a series of motor driving pulses formed from pulses SP0, SP1, P1, SP2 and P2, where SP0 and SP1 indicate magnetic field detecting pulses from the magnetic field detection circuit 5, P1 is the motor driving pulse referred to earlier, SP2 is a rotation detecting pulse and P2 is the compensation motor pulse referred to earlier. The detailed functions of the various pulses are indicated in Japanese Laid Open Patent Application No. 260883/85. Therefore, the step motor is driven for the period when the signal SEL is at level 0.

Next, the charging timing when the signal SEL is at level 1 will be explained. During charging, a signal LIM which is output from a voltage detecting circuit 10 is at level 1, the signal SEL is at level 1, and an AND gate 26 receives the signal LIM so that the OR gate 23 outputs the signal GP1 of level 1. Similarly, the signal LIM is fed to an AND gate 29 and the signal GP2 from the OR gate 24 is level 1. When the signal SEL is at level 1, the signal GN1 generated from the AND gate 27 is at level 0 and as a result the signal GN1 is level 0. Similarly, the signal GN2 is level 0. Therefore, the MOSFETs 12 to 15 are controlled so as to be in the OFF state irrespective of the signals generated from the waveform shaping circuit 3. When the MOSFETs 12 to 15 are in the OFF state, it is possible to charge the secondary battery 8.

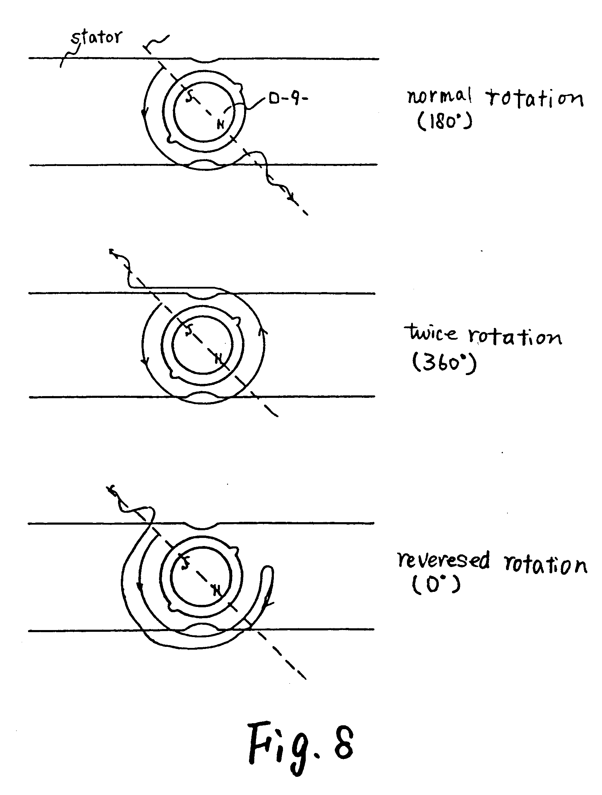

In Figure 5, Ti, which indicates the period from the generation of the compensation motor pulse P2 to the leading timing for charging the secondary battery, is 25.4 milli-seconds and this time is the time required for driving the step motor stably for the reason given below. In the typical step motor driving system described in Japanese Patent Publication No. 40759/87, after the output of the motor pulse, two P-channel MOSFETs or two N-channel MOSFETs are controlled so as to be in the ON state, so that reverse induced current is supplied to the motor coil to brake the rotor, thereby making it possible to drive the step motor stably. Figure 7 shows the current supplied to the motor coil of a step motor. When the reverse induced current does not flow in the motor coil, the current waveform is shown by the dotted line. However, in practice, the current waveform is as shown by the solid line. When the rotor is stopped, the reverse induced current does not flow. In Figure 7, current value of 0 means that rotation of the rotor is stopped. However, since all of the MOSFETs 12 to 15 are in the OFF state during charging, if charging is carried out immediately after the output of the motor driving pulse P1, it is difficult to brake the rotor by supplying the reverse induced current, so that it is impossible to drive the step motor stably, and although the general angle for a two pole rotor is 180°, the step motor is not stopped at the normal magnetic stable point, or may be rotated by two steps, or other mis-operation may occur.

Figure 8 shows the normal rotation (180°), reverse rotation and rotation by two steps of the step motor. To eliminate these problems, in the embodiment of the present invention shown in Figure 1, upon the output of the motor pulse P1, the MOSFETs 12, 13 are turned to the ON state so that the coil 7 is short circuited and, when the rotor of the step motor is stopped, all the MOSFETs 12 to 15 are turned to the OFF state for charging the secondary battery. In such a construction, it is possible to charge the secondary battery without affecting driving of the step motor.

In this embodiment, Ti is predetermined to be 25.4 milli-seconds which is sufficient for the rotor of the step motor to come to rest. However, Ti may be made longer or shorter depending upon the inertial moment of the rotor of the step motor. In general, the smaller the diameter of the rotor, the shorter the period from the generation of the motor driving pulse to the time for stopping completely the rotation of the rotor. When the minimum diameter of the rotor is 1 mm, the rotor is stopped in 10 milli-seconds. In manufacture, it is currently impossible to provide a rotor of less than 1 mm diameter in view of the characteristics of the motor. In this case, there is no problem if Ti is more than 10 milli-seconds. With the type of step motor generally used for wrist watches (although there is difference in variation with rotor inertia and driving pulse width), if Ti is approximately 20 milli-seconds, it is possible to stop the rotor completely and to switch to charging timing of the secondary battery.

Further, in the illustrated embodiment of the present invention, with Ti = 25.4 milli-seconds, the signal SEL is at level 0 for a period of 117.2 milli-seconds. Namely, a series of motor driving pulses are generated from the trailing edge of the 1 Hz signal and the compensation motor pulse P2 is generated 91.8 milli-seconds after the trailing edge of the 1 Hz signal. Furthermore, the signal SEL becomes level 0 in synchronism with the 1 Hz signal and therefore Ti = 117.2 - 91.8 = 25.4 milli-seconds. By changing the logic of the AND gate 33 and the OR gate 32, the period for which the signal SEL is level 0 may be changed and, as a result, it is easier to provide a timing suitable for any step motor. In the illustrated embodiment, the value of Ti is determined by using the generated time of the compensation motor pulse P2. Since during charging, the magnetic field is inevitably detected by the magnetic field detecting pulse SP0 or SP1, a compensation motor pulse P2 is always generated. In an analog electronic timepiece in which no magnetic field detection circuit is provided, the motor driving pulse P1 is used instead to determine the value of Ti. Furthermore, there are several step motor driving methods wherein step motors are driven by a combination of pulses. However, in all cases, Ti may be determined by using a motor driving pulse so as to have a value whereby rotation of the motor is completed before charging of the secondary battery begins.

To drive a step motor stably, the frequency of the AC magnetic field is 1 kHz. When the frequency is too low, the rotor is attracted by the AC magnetic field, thereby setting up sympathetic vibrations of the rotor or mis-operation of the time indicating hands. In a practical embodiment of the present invention where the diameter of the rotor of the step motor is 1.2 mm, it is found from experiment that the rotor is not operated by the AC magnetic field if it has a frequency of more than 600 Hz, and as a result, the step motor is not adversely affected. When the secondary battery 8 is charged to excess, i.e. the upper limit of its storage capacity is exceeded, deterioration or damage to the characteristics of the secondary battery 8 may occur. In order to eliminate this problem, it is necessary to provide a circuit for preventing the secondary battery from being over-charged. For example, in the analog electronic timepiece shown in Figure 1, it is necessary always to detect the voltage of the secondary battery 8 so as not to exceed the upper limit of the voltage of the storage battery, and to this end, the voltage detecting circuit 10 is provided to detect the voltage of the secondary battery 8. The voltage detecting circuit 10 has a voltage decreasing resistor 21 which is provided to decrease the voltage (VDD - VSS) of the secondary battery to within a region where a comparator 20 can operate. A reference voltage generating circuit 20 produces a reference voltage. It is thus possible to detect by means of the comparator 20 whether or not the voltage of the secondary battery exceeds a predetermined voltage accurately. When the voltage of the secondary battery is higher than the predetermined voltage, the signal LIM generated from the comparator 20 is switched to level 0 so that charging of the secondary battery does not take place. When the signal LIM is at level 0, if the signal SEL is at level 1 which indicates charging time, as previously described, the signals GP1 and GP2 are level 1, and the signals GN1 and GN2 are level 0. Thus when the signal LIM is at level 0, the MOSFETs 12, 13 are in the ON state and the MOSFETs 14, 15 are in the OFF state.

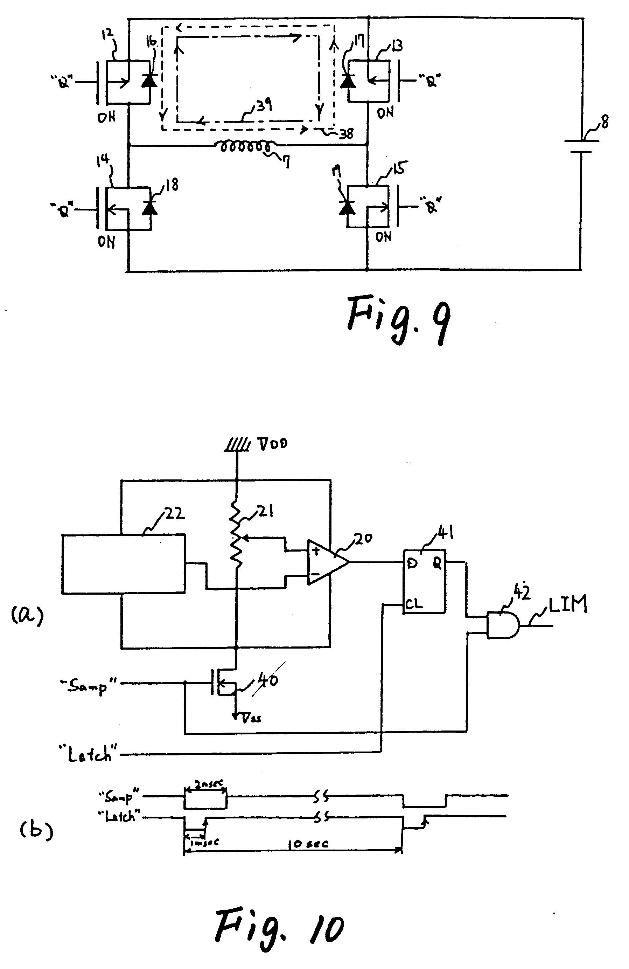

Reference is made to Figure 9 which shows the direction of current flow in the motor driving circuit 6 at the time when the voltage detecting circuit 10 detects that the voltage of the secondary battery exceeds the reference voltage. In Figure 9, when the potential at the right side of the motor coil 7 is higher, current flows in the direction of arrow 38. When the potential at the left side of the motor coil 7 is higher, current flows in the direction of arrow 39. In the illustrated embodiment, the MOSFETs 12, 13 are in the ON state when the voltage of the secondary battery exceeds the reference voltage and so current does not flow into the secondary battery 8 which is thus protected against excessive voltage. The same effect can be achieved if the MOSFETs 14, 15 are in the ON state. The voltage of the secondary battery 8 is always detected by the voltage detecting circuit 10. However, if the secondary battery has a relatively large internal resistance, a sample voltage may be detected at random. In other words, if the secondary battery has a relatively large internal resistance, its voltage is increased by an amount corresponding to its internal resistance during charging, so that that the chance of mis-detection may be increased. Therefore, in this case, it is necessary to provide a voltage detecting circuit such as shown in Figure 10. A sampling signal Samp has an active period of 2 milli-seconds in every ten seconds, and during the active period, it is at level 0. The period when the signal Samp is at level 0 is hereinafter referred to as a sampling timing. Upon turning a transistor 40 to the ON state, power is supplied to the comparator 20, the resistor 21 and the reference voltage generating circuit 22, thereby making it possible to detect the voltage (VDD - VSS) of the secondary battery. During the sampling timing, the signal LIM is switched to level 0 by an AND gate 42 thereby making it possible to prevent charging current from flowing into the secondary battery and prevent any mis-detection of the voltage. A latch 41 is provided to latch the output of the comparator 20 during the sampling timing and keep the latched condition until the next sampling timing. A latch signal Latch is generated in synchronism with the signal Samp as a clock signal of the latch 41 and is at level 0 for 1 milli-second. The signal generated from the comparator 20 is input to the latch 41 at the leading edge of the signal Latch. The voltage detecting circuit of Figure 10 is effective in decreasing power consumption, in addition to preventing mis-detection of the voltage of the secondary battery. Namely, since power is not supplied to the comparator 20, the resistor 21 and the reference voltage generating circuit 22 except during the sampling timing, current consumption is decreased. Therefore, even when a secondary battery has a comparatively low internal resistance and the voltage detecting circuit has the construction shown in Figure 10, it is possible to decrease power consumption. It will be appreciated that the period of the sampling timing and sampling width can be varied in accordance with the variation of construction of the secondary battery etc.

In the above embodiments, the parasitic diode of the motor driver FET is described as a rectifying element.

The analog electronic timepiece described above has the advantage that over-charging of the secondary battery can be prevented without providing any external electronic circuitry and charging mechanism. Therefore, the visual appearance of the electronic timepiece is not changed, so that the present invention may be incorporated in a thin dress type watch and further, it is possible to provide a small-sized and low cost analog electronic timepiece. In electronic timepieces known to date the movement of the time indicating hands must be stopped during charging of the secondary battery. However, it is possible to charge the secondary battery of an analog electronic timepiece according to the present invention whilst still moving the time indicating hands, resulting in good time keeping so that re-setting of the time indicating hands after charging the secondary battery is not necessary. The coil for charging the secondary battery also serves as the coil for driving the step motor, parasitic diodes serving as a rectifying circuit and thus no voltage limiting element is required. In particular, as described in the above embodiment of the present invention, MOSFETs for driving the step motor are used as short circuit means for the coil of the step motor to ensure that the rotor of the step motor has stopped rotating before charging of the secondary battery is initiated.

An application no. 92111462.5 (Publication No. 0510730) has been divided out of the present application and is directed to an analog electronic timepiece comprising at least a step motor, switching elements for driving the step motor, a PN-junction electronically parallel to said switching elements, a second battery which can be charged, voltage detecting means for detecting the voltage of the secondary battery and charge control means for controlling the charging of the secondary means for controlling the charging of the secondary battery, said charge control means being connected to the voltage detecting means, wherein when it is detected by said voltage detecting means that the voltage of said secondary battery has reached a pre-determined value the step motor is short-circuited by said charge control circuit, except during the time of generating pulses to drive said step motor.

## Claims

1. An analog electronic timepiece comprising a driving circuit (6) including a plurality of switching elements (12; 13; 14; 15) for applying driving pulses to a coil (7) of a step motor arranged to drive time indicating hands, a rechargeable battery (8) and charging means (9) for charging the battery (8) in the period between the application of driving pulses to the coil (7) of the step motor, so that charging of the battery (8) does not interrupt driving of the time indicating hands, characterised in that each switching element is a MOSFET and the charging means (9) includes a PN-junction (16; 17; 18; 19) being constituted by a parasitic diode formed between the substrate and drain or source of each MOSFET, and thus in parallel with each switching element (12; 13; 14; 15) for rectifying an alternating current voltage induced in the coil (7) of the step motor by an external alternating magnetic field.

2. A timepiece as claimed in claim 1, characterised by means (23, 24) for short circuiting the coil (7) of the step motor after termination of each driving pulse and before charging of the battery (8) commences.

3. A timepiece as claimed in claim 1 or 2, characterised in that the charging means (9) is such that during charging of the battery (8) the switching elements (12; 13; 14; 15) are in an OFF state, so that the PN-junctions (16; 17; 18; 19) constitute a rectifying circuit.

4. A timepiece as claimed in claim 1, 2 or 3, characterised by including means (10) for detecting the voltage of the battery (8) and for preventing charging thereof if the voltage detected exceeds a predetermined voltage.

## Patentansprüche

1. Analoge elektronische Uhr, umfassend eine Treiberschaltung (6) mit einer Mehrzahl von Schaltelementen (12; 13; 14; 15) zum Anlegen von Treiberimpulsen an eine Spule (7) eines zum Antrieb von zeitangebenden Zeigern ausgebildeten Schrittmotors, eine wiederaufladbare Batterie (8) und ein Lademittel (9) zum Laden der Batterie (8) in der Zeit zwischen der Anlegung von Treiberimpulsen an die Spule (7) des Schrittmotors, so daß das Laden der Batterie (8) den Antrieb der zeitangebenden Zeiger nicht unterbricht,
**dadurch gekennzeichnet,**
daß jedes Schaltelement ein MOSFET ist und das Lademittel (9) zur Gleichrichtung einer durch ein externes magnetisches Wechselfeld in der Spule (7) des Schrittmotors induzierten Wechselspannung einen PN-Übergang (16; 17; 18; 19) umfaßt, welcher durch eine parasitäre Diode gebildet ist, die zwischen dem Substrat und Drain oder Source jedes MOSFET und somit parallel zu jedem Schaltelement (12; 13; 14; 15) gebildet ist.

2. Uhr nach Anspruch 1,
gekennzeichnet durch Mittel (23, 24) zum Kurzschließen der Spule (7) des Schrittmotors nach dem Ende jedes Treiberimpulses und vor dem Beginn des Ladens der Batterie (8).

3. Uhr nach Anspruch 1 oder 2,
dadurch gekennzeichnet, daß das Lademittel (9) derart ist, daß sich während des Ladens der Batterie (8) die Schaltelemente (12; 13; 14; 15) in einem AUS-Zustand befinden, so daß die PN-Übergänge (16; 17; 18; 19) eine Gleichrichterschaltung bilden.

4. Uhr nach Anspruch 1, 2 oder 3,
dadurch gekennzeichnet, daß sie Mittel (10) zum Erfassen der Spannung der Batterie (8) und zum Verhindern des Ladens derselben dann, wenn die erfaßte Spannung eine vorbestimmte Spannung übersteigt, umfaßt.

## Revendications

1. Montre électronique analogique comprenant un circuit d'entraînement (6) comportant une pluralité d'éléments de commutation (12 ; 13 ; 14 ; 15) pour appliquer des impulsions d'entraînement à un enroulement (7) d'un moteur pas à pas installé pour entraîner les aiguilles indiquant l'heure, une batterie rechargeable (8) et des moyens de charge (9) pour charger la batterie (8) dans la période qui s'écoule entre l'application des impulsions d'entraînement à l'enroulement (7) du moteur pas à pas, de façon que la charge de la batterie (8) n'interrompe pas l'entraînement des aiguilles indiquant l'heure, caractérisée en ce que chaque élément de commutation est un transistor MOS à effet de champ (MOSFET) et le moyen de charge (9) comprend une jonction PN (16 ; 17 ; 18 ; 19) constituée par une diode parasite formée entre le substrat et l'électrode de drain ou de source de chaque MOSFET, et ainsi en parallèle avec chaque élément de commutation (12 ; 13 ; 14 ; 15) pour redresser une tension en courant alternatif induite dans l'enroulement (7) du moteur pas à pas par un champ magnétique alternatif extérieur.

2. Montre selon la revendication 1, caractérisée par des moyens (23, 24) pour court-circuiter l'enroulement (7) du moteur pas à pas à la fin de chaque impulsion d'entraînement et avant le début de la charge de la batterie (8).

3. Montre selon la revendication 1 ou 2, caractérisée en ce que le moyen de charge (9) est tel que pendant la charge de la batterie (8) les éléments de commutation (12 ; 13 ; 14 ; 15) sont à l'état BLOQUE, si bien que les jonctions PN (16 ; 17 ; 18 ; 19) constituent un circuit redresseur.

4. Montre selon l'une des revendications 1, 2 ou 3, caractérisée en ce qu'elle comprend un moyen (10) pour détecter la tension de la batterie (8) et pour empêcher de charger la batterie si la tension détectée dépasse une tension déterminée d'avance.
